# EUROPEAN PATENT APPLICATION

(11) **EP 4 057 402 A1**
(43) Date of publication of application: **14.09.2022**
(21) Application number: 20884051.2
(22) Date of filing: 23.09.2020
(51) Int. Cl.: H01M 10/04, H01M 50/572, H01M 10/42, H01M 10/654, H01M 50/531

(54) **ELECTRODE ASSEMBLY AND SECONDARY BATTERY INCLUDING SAME**

(30) Priority: 08.11.2019 KR 20190142204
(71) Applicant: LG ENERGY SOLUTION, LTD., Seoul 07335 (KR)
(72) Inventor: MIN, Seung Jun, Daejeon 34122 (KR); KIM, Jung Jin, Daejeon 34122 (KR)
(74) Representative: Goddar, Heinz J.
(86) International application number: PCT/KR2020/012903
(87) International publication number: WO 2021/091082

(57) **Abstract**

The present invention relates to an electrode assembly, in which a first electrode and a second electrode are wound in a jelly-roll shape with a separator therebetween, the electrode assembly comprising: a first electrode comprising a first winding start portion provided at a winding start point without having a first electrode active material, a first winding end portion provided at a winding end point without having the first electrode active material, and a first coating portion provided between the first winding start portion and the first winding end portion and coated with the first electrode active material; a second electrode comprising a second winding start portion provided at a winding start point without having a second electrode active material, a second winding end portion provided at a winding end point without having the second electrode active material, and a second coating portion provided between the second winding start portion and the second winding end portion and coated with the second electrode active material; an electrode tab part comprising a first electrode tab provided at the first winding end portion of the first electrode and a second electrode tab provided at the winding start portion of the second electrode; and a first protective member attached to a surface of the second winding end portion of the second electrode facing the first electrode tab.

## Description

### CROSS-REFERENCE TO RELATED APPLICATION

The present application claims the benefit of the priority of Korean Patent Application No. 10-2019-0142204, filed on November 08, 2019, which is hereby incorporated by reference in its entirety.

### TECHNICAL FIELD

The present invention relates to an electrode assembly having heat dissipation properties and a secondary battery comprising the same.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

The secondary battery is classified into a can-type secondary battery in which an electrode assembly is embedded in a metal can and a pouch-type secondary battery in which an electrode assembly is embedded in a pouch. The can-type secondary battery comprises an electrode assembly, a can accommodating the electrode assembly, and a cap assembly mounted on an opening of the can, and the electrode assembly has a structure in which electrodes and separators are alternately stacked. Furthermore, the electrodes comprise a first electrode and a second electrode. The first electrode is coupled to the can through a first electrode tab, and the second electrode is coupled to the cap assembly through a second electrode tab.

However, in the above-described secondary battery, when short circuit occurs while the first electrode and the second electrode are in contact with each other, a temperature of the electrode assembly may increase. In this case, when heat generated in the electrode assembly is not rapidly dissipated, the temperature of the electrode assembly increases rapidly to cause explosion and ignition.

### DISCLOSURE OF THE INVENTION

### TECHNICAL PROBLEM

The present invention has been invented to solve the above problems, and an object of the present invention is to provide an electrode assembly which is capable of quickly dissipating heat generated therein to the outside to prevent the electrode assembly from being exploded or ignited, and a secondary battery comprising the same.

### TECHNICAL SOLUTION

An electrode assembly, in which a first electrode and a second electrode are wound in a jelly-roll shape with a separator therebetween, according to the present invention for achieving the above object comprises: a first electrode comprising a first winding start portion provided at a winding start point without having a first electrode active material, a first winding end portion provided at a winding end point without having the first electrode active material, and a first coating portion provided between the first winding start portion and the first winding end portion and coated with the first electrode active material; a second electrode comprising a second winding start portion provided at a winding start point without having a second electrode active material, a second winding end portion provided at a winding end point without having the second electrode active material, and a second coating portion provided between the second winding start portion and the second winding end portion and coated with the second electrode active material; an electrode tab part comprising a first electrode tab provided at the first winding end portion of the first electrode and a second electrode tab provided at the winding start portion of the second electrode; and a first protective member attached to a surface of the second winding end portion of the second electrode facing the first electrode tab.

The first protective member may be made of a material having heat dissipation properties.

The first protective member may have an area greater than that of the first electrode tab disposed inside the first winding end portion.

The electrode assembly may further comprise a second protective member attached to a surface of the first winding start portion of the first electrode facing the second electrode tab.

The second protective member may be made of a material having heat dissipation properties.

The second protective member may have an area greater than that of the second electrode tab disposed inside the second winding start portion

The first protective member may have an area greater than that of the second protective member.

The first winding start portion and the first winding end portion may have lengths different from each other when viewed in a longitudinal direction of the first electrode, wherein the first winding end portion may have a length greater than that of the first winding start portion.

The second winding start portion and the second winding end portion may have lengths different from each other when viewed in a longitudinal direction of the second electrode, wherein the second winding end portion may have a length greater than that of the second winding start portion.

A first protective tape may be attached to the first electrode tab, and the first protective tape may be made of a material having heat dissipation properties.

A second protective tape may be attached to the second electrode tab, and the second protective tape may be made of a material having heat dissipation properties.

The first electrode may be a positive electrode, and the second electrode may be a negative electrode.

The first protective member may be attached to one surface of the second winding end portion of the second electrode facing the first electrode tab, an auxiliary member may be attached to the other surface of the second winding end portion of the second electrode corresponding to the first protective member, and the first protective member and the auxiliary member may be connected to each other through a connection part passing through the second winding end portion.

The first protective member, the auxiliary member, and the connection member may be integrally formed and made of materials having heat dissipation properties.

A secondary battery according to the present invention comprises: an electrode assembly, in which a first electrode and a second electrode are wound in a jelly-roll shape with a separator therebetween; and a case configured to accommodate the electrode assembly, wherein the electrode assembly comprises: a first electrode comprising a first winding start portion provided at a winding start point without having a first electrode active material, a first winding end portion provided at a winding end point without having the first electrode active material, and a first coating portion provided between the first winding start portion and the first winding end portion and coated with the first electrode active material; a second electrode comprising a second winding start portion provided at a winding start point without having a second electrode active material, a second winding end portion provided at a winding end point without having the second electrode active material, and a second coating portion provided between the second winding start portion and the second winding end portion and coated with the second electrode active material; an electrode tab part comprising a first electrode tab provided at the first winding end portion of the first electrode and a second electrode tab provided at the winding start portion of the second electrode; and a first protective member attached to a surface of the second winding end portion of the second electrode facing the first electrode tab. second winding end portion of the second electrode facing the first electrode tab.

### ADVANTAGEOUS EFFECTS

The electrode assembly according to the present invention may comprise the first protective member attached to the surface of the second winding end portion of the second electrode facing the first electrode tab. Therefore, the first electrode tab and the second electrode may be prevented from being in contact with each other to previously prevent the short circuit, thereby improving the stability.

Particularly, in the electrode assembly according to the present invention, the first protective member may be made of the material having the heat dissipation property. Therefore, the heat generated in the electrode assembly may be quickly dissipated to the outside, and thus, the increase in temperature of the electrode assembly may be suppressed to prevent the secondary battery from being exploded or ignited. In particular, the first protective member may effectively dissipate the heat generated between the first electrode tab and the second electrode.

In addition, in the electrode assembly according to the present invention, the first protective member may have the area larger than that of the first electrode tab disposed within the first winding end portion of the first electrode. Therefore, the heat dissipation property of the electrode assembly may be greatly improved, and in particular, the heat generated in the first winding end portion of the first electrode, to which the first electrode tab is attached, as well as the first electrode tab may be quickly dissipated to the outside.

In addition, in the electrode assembly according to the present invention, the second protective member may be further attached to the surface of the first winding start portion of the first electrode facing the second electrode tab. Therefore, the second electrode tab and the first electrode may be prevented from being in contact with each other, and the increase in temperature of the electrode assembly may be suppressed to prevent the electrode assembly from being exploded or ignited.

Particularly, in the electrode assembly according to the present invention, the second protective member may be made of the material having the same heat dissipation property as the first protective member. Therefore, the heat generated in the electrode assembly may be quickly dissipated to the outside, and thus, the increase of the temperature of the electrode assembly may be suppressed to prevent the electrode assembly from being exploded or ignited. In particular, the second protective member may effectively dissipate the heat generated between the second electrode tab and the first electrode.

In addition, in the electrode assembly according to the present invention, the second electrode may comprise the second winding start portion and the second winding end portion, and the second winding end portion may have the length greater than that of the second winding start portion. Therefore, since the heat generated inside the electrode assembly is effectively dissipated by the first and second protective members, the length of the second winding start portion may be minimized, and the length of the second winding end portion may increase to improve the bonding force and the heat dissipation property.

In addition, in the electrode assembly according to the present invention, the first and second protective tapes having the heat dissipation properties may be attached to the first and second electrode tabs. Therefore, the heat generated in the first and second electrode tabs may be effectively dissipated, and thus, the increase in temperature of the electrode assembly may be significantly suppressed.

### BRIEF DESCRIPTION OF THE DRAWINGS

FIG. 1 is an exploded perspective view illustrating a state before an electrode assembly is wound according to a first embodiment of the present invention.
FIG. 2 is a plan view of FIG. 1.
FIG. 3 is a cross-sectional view taken along line A-A of FIG. 2.
FIG. 4 is a cross-sectional view taken along line B-B of FIG. 2.
FIG. 5 is a front view illustrating a first protective tape of the electrode assembly provided in a secondary battery according to the first embodiment of the present invention.
FIG. 6 is a front view illustrating a second protective tape of the electrode assembly provided in the secondary battery according to the first embodiment of the present invention.
FIG. 7 is a cross-sectional view of a secondary battery according to a second embodiment of the present invention.
FIG. 8 is a cross-sectional view of an electrode assembly according to a third embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Electrode assembly according to first embodiment of the present invention]

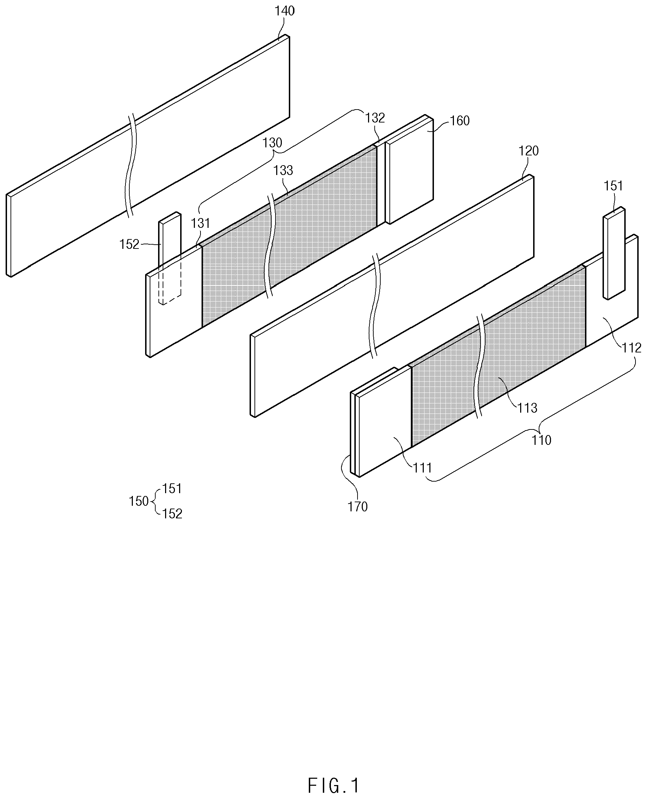

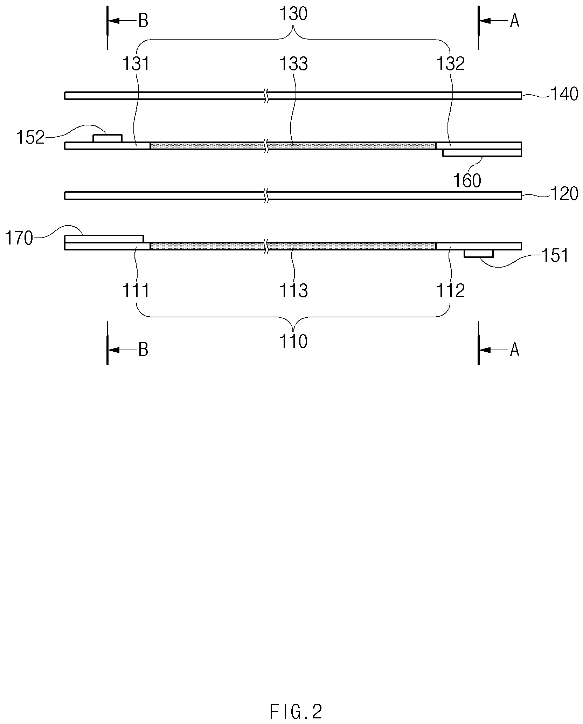

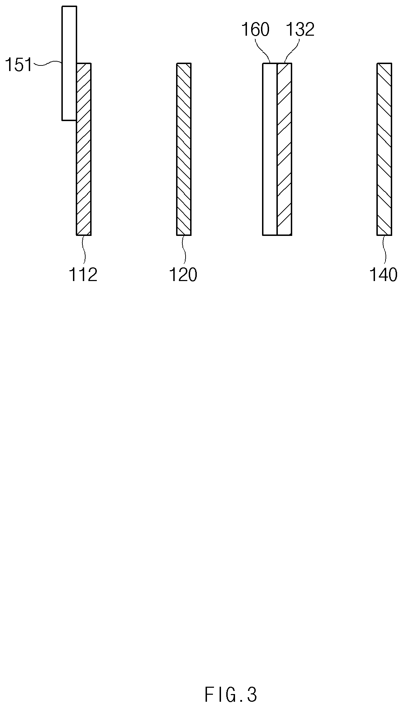

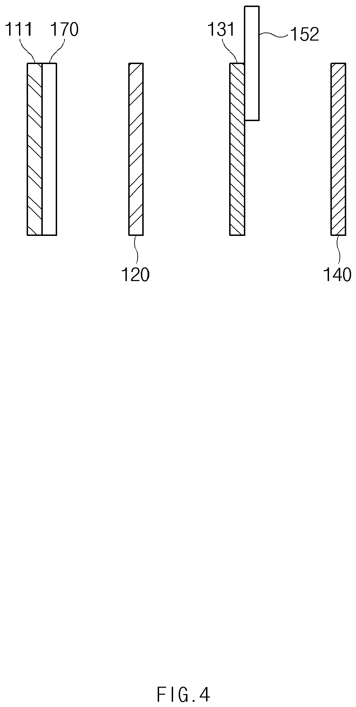

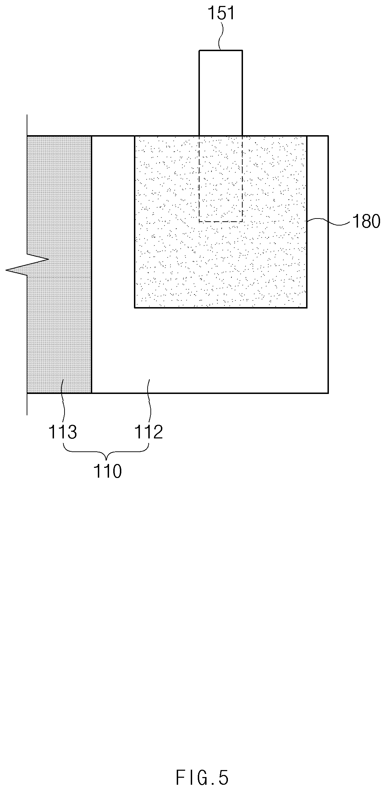

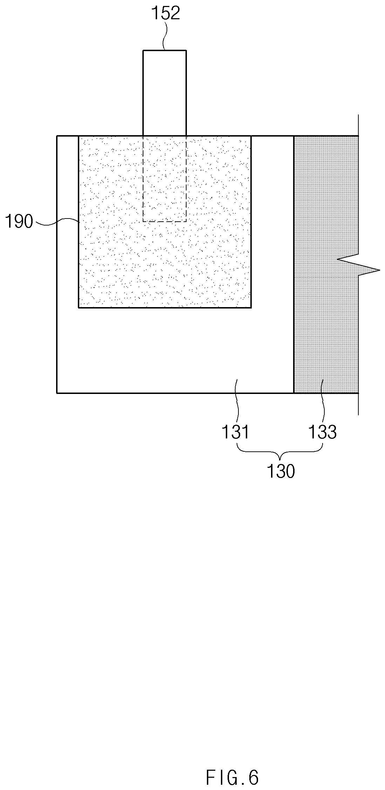

As illustrated in FIGS. 1 to 6, an electrode assembly 100 according to a first embodiment of the present invention has a structure in which a first electrode and a second electrode are wound in a jelly-roll shape with a separator interposed therebetween.

For example, in the electrode assembly 100 according to the first embodiment of the present invention, a first electrode 110, a separator 120, a second electrode 130, and a separator 140 are sequentially stacked in a front and rear direction when viewed in FIG. 1 and also are wound in the jelly-roll shape from a winding start point (a left end when viewed in FIG. 1) to a winding end point (a right end when viewed in FIG. 1).

### First electrode

The first electrode 110 comprises a first winding start portion 111 provided at a winding start point without having a first electrode active material, a first winding end portion 112 provided at a winding end point without having the first electrode active material, and a first coating portion 113 provided between the first winding start portion 111 and the first winding end portion 112 and coated with the first electrode active material.

### Second electrode

The second electrode 130 comprises a second winding start portion 131 provided at a winding start point without having a second electrode active material, a second winding end portion 132 provided at a winding end point without having the second electrode active material, and a second coating portion 133 provided between the second winding start portion 131 and the second winding end portion 132 and coated with the second electrode active material.

The electrode assembly 100 according to the first embodiment of the present invention comprises an electrode tab part 150.

### Electrode tab part

The electrode tab part 150 comprises a first electrode tab 151 provided at the first winding end portion 112 of the first electrode 110 and a second electrode tab 152 provided at the winding start portion 131 of the second electrode 130.

The first electrode 110 is a positive electrode, and the second electrode 130 is a negative electrode. Also, the first electrode tab 151 is a positive electrode tab, and the second electrode tab 152 is a negative electrode tab.

Here, the electrode assembly 100 according to the first embodiment of the present invention may comprise the positive electrode tab, which is the first electrode tab 151, at the first winding end portion 112 of the first electrode 110 to quickly dissipate heat generated in the positive electrode tab when short circuit occurs to the outside, thereby previously preventing the electrode assembly 100 from being exploded or ignited. That is, when the short circuit occurs, more heat is generated in the positive electrode tab than the negative electrode tab. Thus, the positive electrode tan may be provided at the first winding end portion 112 of the first electrode 110, which is disposed outside the electrode assembly, to quickly dissipate the heat generated in the positive electrode tab to the outside.

### First protective member

The electrode assembly 100 according to the first embodiment of the present invention may comprise a first protective member 160 attached to a surface of the second winding end portion 132 of the second electrode 130 facing the first electrode tab 151. The first protective member 160 may prevent the second winding end portion 132 of the second electrode 130 from being deformed by the first electrode tab 151 to prevent the first electrode tab 151 and the second electrode 130 from being in contact with each other, thereby improving stability.

Here, an edge of the first protective member 160 further comprises an extension portion extending out of an edge of the second winding end portion 132, and the extension portion is bent along the edge of the first protective member 160 and then is attached to the other surface of the second winding end portion 132 to which the first protective member 160 is not attached. Thus, the edge of the second winding end portion 132 may increase in strength.

The first protective member 160 may be made of a material having heat dissipation properties. That is, the electrode assembly 100 may generate high heat during charging and discharging or when the short circuit occurs. Thus, the electrode assembly 100 may be exploded or ignited due to the high heat. In order to prevent this phenomenon, in the electrode assembly 100 according to the first embodiment of the present invention, the first protective member 160 may be made of the material having the heat dissipation properties. Thus, the heat generated outside the electrode assembly 100 may be quickly dissipated to the outside through the first protective member to suppress the increase in temperature of the electrode assembly 100, thereby preventing the electrode assembly 100 from being exploded or ignited.

In particular, the first protective member 160 may be attached to an entire surface of the second winding end portion 132, and thus the heat dissipation from an upper portion to a lower portion of an outer surface of the electrode assembly 100 may increase.

In addition, the first protective member 160 may have an area greater than that of the first electrode tab 151 disposed inside the first winding end portion 112. Thus, the second winding end portion 132 of the second electrode 130 may be prevented from being damaged by the first electrode tab 151, and heat generated in the first electrode tab 151 may be effectively absorbed through the first protective member 160 and then be dissipated to the outside.

The surface of the first protective member 160 may have an uneven shape, and accordingly, the first protective member 160 may be easily bent to effectively dissipate the heat through the unevenness.

### Second protective member

The electrode assembly 100 according to the first embodiment of the present invention may comprise a second protective member 170 attached to a surface of the first winding end portion 111 of the first electrode 110 facing the second electrode tab 152. The second protective member 170 may support the first electrode tab 151 to prevent the second winding end portion 132 of the second electrode 130 from being deformed by the second electrode tab 151 to prevent the first electrode tab 151 and the second electrode 130 from being in contact with each other, thereby improving stability.

The second protective member 170 may be made of a material having heat dissipation properties. That is, the electrode assembly 100 may generate high heat during charging and discharging or when the short circuit occurs. Thus, the electrode assembly 100 may be exploded or ignited due to the high heat. In particular, the second protective member 170 may effectively dissipate heat generated in a core portion of the electrode assembly 100 to significantly suppress an increase in temperature of the electrode assembly 100.

Here, the second protective member 170 may have an area greater than that of the second electrode tab 152 to prevent the first winding start portion 111 from being deformed by the second electrode tab 152.

The surface of the second protective member 170 may have an uneven shape, and accordingly, the second protective member 170 may be easily bent to effectively dissipate the heat through the unevenness. That is, the second protective member 170 may have a plurality of grooves formed in a longitudinal direction of the first electrode 110, and the grooves are formed lengthily in a width direction of the first electrode. Thus, the second protective member 170 may be easily bent through the grooves, and thus, the first winding start portion 111 of the first electrode 110 to which the second protective member 170 is attached may be easily wound.

The first protective member 160 may have an area greater than that of the second protective member 170. Thus, the first protective member 160 surrounding the outside of the electrode assembly 100 may increase in area to more easily dissipate the heat generated in the electrode assembly 100. The second protective member 170 may have an area less than that of the first protective member 160 to significantly reduce an increase in volume of the core portion of the electrode assembly 100.

The first winding start portion 111 and the first winding end portion 112 have different lengths when viewed in the longitudinal direction of the first electrode 110. Here, the first winding end portion 112 may have a length greater than that of the first winding start part 111. That is, since the electrode tab is not attached to the first winding start portion 111, the size is minimized, and since the electrode tab is attached to the first winding end portion 112, the size maximally increases. Accordingly, the electrode tab may be stably attached.

The second winding start portion 131 and the second winding end portion 132 have different lengths when viewed in the longitudinal direction of the second electrode 130. Here, the second winding end portion 132 may have a length greater than that of the second winding start part 131. Here, the second winding end portion 132 has a size corresponding to that of the first winding end portion 112. Thus, the second winding end portion 132 may effectively cover the first winding end portion 112. Particularly, the first protective member 160 may significantly increase in area, and thus, the heat dissipation of the electrode assembly 100 may increase.

### First protective tape

In the electrode assembly 100 according to the first embodiment of the present invention, a first protective tape 180 may be attached to the first electrode tab 151. The first protective tape 180 may remove a height difference between the first electrode tab 151 and the first winding end portion 112 and prevent the separator 120 from being damaged by the first electrode tab 151.

In addition, the first protective tape 180 is made of a material having heat dissipation properties, and accordingly, heat generated in the core portion of the electrode assembly 100 may be quickly dissipated to the outside.

The first protective tape 180 and the first protective member 160 may be provided with the same size, thickness, and material to prevent the electrode from being damaged by the first protective tape 180 and the first protective member 160.

### Second protective tape

In the electrode assembly 100 according to the first embodiment of the present invention, a second protective tape 190 may be attached to the second electrode tab 152. The second protective tape 190 may remove a height difference between the second electrode tab 152 and the second winding start portion 131 and prevent the separator 140 from being damaged by the second electrode tab 152.

In particular, the second protective tape 190 is made of a material having heat dissipation properties, and thus the heat generated in the second electrode tab 152 may be effectively dissipated.

Here, the second protective tape 190 and the second protective member are provided with the same size, thickness, and material.

Thus, the electrode assembly 100 according to the first embodiment of the present invention may quickly dissipate the heat generated outside and inside the electrode assembly to the outside to prevent the electrode assembly from being exploded or ignited.

Hereinafter, in descriptions of another embodiment of the present invention, constituents having the same function as the above-mentioned embodiment have been given the same reference numeral in the drawings, and thus duplicated description will be omitted.

### [Secondary battery according to second embodiment of the present invention]

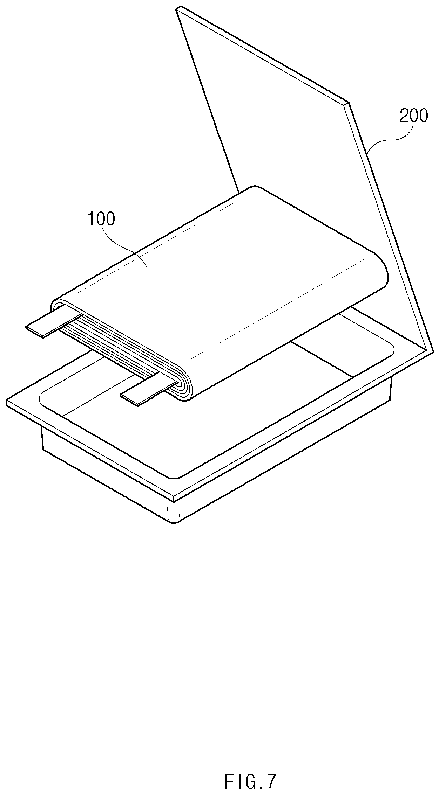

As illustrated in FIG. 7, a secondary battery according to a second embodiment of the present invention comprises an electrode assembly 100, in which a first electrode and a second electrode are wound in a jelly-roll shape with a separator interposed therebetween, and a case 200 accommodating the electrode assembly 100.

Here, the electrode assembly comprises a first electrode, a separator, a second electrode, and a separator.

The first electrode comprises a first winding start portion provided at a winding start point without having a first electrode active material, a first winding end portion provided at a winding end point without having the first electrode active material, and a first coating portion provided between the first winding start portion and the first winding end portion and coated with the first electrode active material.

The second electrode comprises a second winding start portion provided at a winding start point without having a second electrode active material, a second winding end portion provided at a winding end point without having the second electrode active material, and a second coating portion provided between the second winding start portion and the second winding end portion and coated with the second electrode active material.

In addition, the electrode assembly comprises an electrode tab part. The electrode tab part comprises a first electrode tab provided at the first winding end portion of the first electrode and a second electrode tab provided at a winding start portion of the second electrode.

Here, the electrode assembly comprises a first protective member on a surface of the second winding end portion of the second electrode facing the first electrode tab and a second protective member attached to a surface of the first winding start portion of the first electrode facing the second electrode tab. Accordingly, heat generated in the electrode assembly may be effectively dissipated by the first and second protective members.

Therefore, in the secondary battery according to the second embodiment of the present invention, the heat generated in the electrode assembly may be effectively dissipated.

### [Electrode assembly according to third embodiment of the present invention]

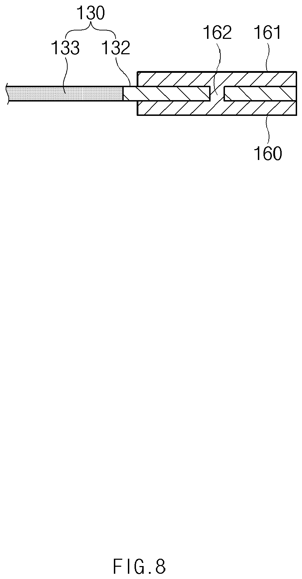

As illustrated in FIG. 8, an electrode assembly 100 according to a third embodiment of the present invention has a structure in which a first protective member 160 is attached on one surface of a second winding end portion 132 of a second electrode 130, an auxiliary member 161 is attached to the other surface of the second winding end portion 132 of the second electrode 130 facing the first protective member 160, and the first protective member 160 and the auxiliary member 161 are connected to each other through a connection part 162 passing through the second winding end portion 132.

Here, the first protective member 160, the auxiliary member 161, and the connection part 162 are integrally formed and made of materials having heat dissipation properties.

Therefore, the electrode assembly 100 according to the third embodiment of the present invention may disperse heat transferred to the first protective member 160 up to the auxiliary member 161 through the connection part 162 to more effectively dissipate the heat generated in the electrode assembly 100.

The connection part 162 may be provided in plurality. Thus, the first protective member 160 and the auxiliary member 161 may be connected to each other through the plurality of connection parts 162, and accordingly, the heat transferred to the first protective member 160 may be more quickly dispersed to the auxiliary member 161.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

- 100:: Electrode assembly
- 110:: First electrode
- 120, 140:: Separator
- 130:: Second electrode
- 150:: Electrode tab part
- 160:: First protective member
- 170:: Second protective member
- 180:: First protective tape
- 190:: Second protective tape

## Claims

1. An electrode assembly, in which a first electrode and a second electrode are wound in a jelly-roll shape with a separator therebetween, the electrode assembly comprising:
a first electrode comprising a first winding start portion provided at a winding start point without having a first electrode active material, a first winding end portion provided at a winding end point without having the first electrode active material, and a first coating portion provided between the first winding start portion and the first winding end portion and coated with the first electrode active material;
a second electrode comprising a second winding start portion provided at a winding start point without having a second electrode active material, a second winding end portion provided at a winding end point without having the second electrode active material, and a second coating portion provided between the second winding start portion and the second winding end portion and coated with the second electrode active material;
an electrode tab part comprising a first electrode tab provided at the first winding end portion of the first electrode and a second electrode tab provided at the winding start portion of the second electrode; and
a first protective member attached to a surface of the second winding end portion of the second electrode facing the first electrode tab.

2. The electrode assembly of claim 1, wherein the first protective member is made of a material having heat dissipation properties.

3. The electrode assembly of claim 1, wherein the first protective member has an area greater than that of the first electrode tab disposed inside the first winding end portion.

4. The electrode assembly of claim 1, further comprising a second protective member attached to a surface of the first winding start portion of the first electrode facing the second electrode tab.

5. The electrode assembly of claim 4, wherein the second protective member is made of a material having heat dissipation properties.

6. The electrode assembly of claim 4, wherein the second protective member has an area greater than that of the second electrode tab disposed inside the second winding start portion.

7. The electrode assembly of claim 4, wherein the first protective member has an area greater than that of the second protective member.

8. The electrode assembly of claim 1, wherein the first winding start portion and the first winding end portion have lengths different from each other when viewed in a longitudinal direction of the first electrode,
wherein the first winding end portion has a length greater than that of the first winding start portion.

9. The electrode assembly of claim 1, wherein the second winding start portion and the second winding end portion have lengths different from each other when viewed in a longitudinal direction of the second electrode,
wherein the second winding end portion has a length greater than that of the second winding start portion.

10. The electrode assembly of claim 1, wherein a first protective tape is attached to the first electrode tab, and
the first protective tape is made of a material having heat dissipation properties.

11. The electrode assembly of claim 1, wherein a second protective tape is attached to the second electrode tab, and
the second protective tape is made of a material having heat dissipation properties.

12. The electrode assembly of claim 1, wherein the first electrode is a positive electrode, and the second electrode is a negative electrode.

13. The electrode assembly of claim 1, wherein the first protective member is attached to one surface of the second winding end portion of the second electrode facing the first electrode tab,
an auxiliary member is attached to the other surface of the second winding end portion of the second electrode corresponding to the first protective member, and
the first protective member and the auxiliary member are connected to each other through a connection part passing through the second winding end portion.

14. The electrode assembly of claim 13, wherein the first protective member, the auxiliary member, and the connection member are integrally formed and made of materials having heat dissipation properties.

15. A secondary battery comprising:
an electrode assembly, in which a first electrode and a second electrode are wound in a jelly-roll shape with a separator therebetween; and
a case configured to accommodate the electrode assembly,
wherein the electrode assembly comprises:
a first electrode comprising a first winding start portion provided at a winding start point without having a first electrode active material, a first winding end portion provided at a winding end point without having the first electrode active material, and a first coating portion provided between the first winding start portion and the first winding end portion and coated with the first electrode active material;
a second electrode comprising a second winding start portion provided at a winding start point without having a second electrode active material, a second winding end portion provided at a winding end point without having the second electrode active material, and a second coating portion provided between the second winding start portion and the second winding end portion and coated with the second electrode active material;
an electrode tab part comprising a first electrode tab provided at the first winding end portion of the first electrode and a second electrode tab provided at the winding start portion of the second electrode; and
a first protective member attached to a surface of the second winding end portion of the second electrode facing the first electrode tab.
